# FASCICULE DE BREVET EUROPEEN

(11) **EP 3 476 700 B1**
(45) Date de publication et mention de la délivrance du brevet: **20.01.2021**
(21) Numéro de dépôt: 18201592.5
(22) Date de dépôt: 19.10.2018
(51) Int. Cl.: B62D 25/02, B62D 25/06, B62D 27/02, B62D 29/00

(54) **AGENCEMENT D'UNE CAISSE DE VÉHICULE ET PROCÉDÉ DE RÉALISATION ASSOCIÉ**
ANORDNUNG EINER FAHRZEUGKAROSSERIE, UND ENTSPRECHENDES HERSTELLUNGSVERFAHREN
ARRANGEMENT OF A VEHICLE BODY AND ASSOCIATED PRODUCTION METHOD

(30) Priorité: 24.10.2017 FR 1760044
(43) Date de publication de la demande: 01.05.2019
(73) Titulaire: RENAULT s.a.s., 92100 Boulogne-Billancourt (FR)
(72) Inventeur: POULLARD, Christophe, 78640 NEAUPHLE LE VIEUX (FR); ANFRAY, Philippe, 78790 Saint Martin des Champs (FR)

(56) Documents cités:
- FR-A1- 3 013 281
- JP-A- H08 225 085
- JP-A- 2016 002 840

## Description

La présente invention porte sur une structure de caisse pour un véhicule destiné à recevoir un moyen de portage.

L'invention concerne plus particulièrement les moyens de liaison des pièces de structure permettant d'améliorer la qualité d'assemblage. Un véhicule automobile est généralement réalisé avec une caisse formant l'ossature structurelle sur laquelle sont fixés des éléments de carrosserie.

Les pièces de structure de caisse sont assemblées entre elles par soudage, ce qui nécessite un recouvrement partiel, parfois une superposition de plusieurs pièces de structure pour former ce que l'on nomme par la suite un nœud de transfert d'efforts.

Un nœud de transfert d'efforts est une zone de l'ossature structurelle par laquelle des efforts importants peuvent être supportés. Par exemple, la partie sommitale du pavillon comprend des nœuds de transfert d'efforts qui sont destinés à la fixation d'un moyen de portage.

La superposition d'un renfort de brancard, d'un support de traverse de pavillon avec un côté de caisse délimite un nœud de transfert d'efforts sur lequel peut être rapporté un renfort de fixation d'un moyen de portage. Un moyen de portage peut être du type d'une barre de toit longitudinale ou transversale qui est rapportée sur le côté extérieur du pavillon et fixé au renfort de fixation par vissage. A cet effet, le renfort de fixation comprend un écrou dédié à la fixation de la barre de toit. Le document FR3013281 décrit un tel renfort.

Les tolérances de fabrication des pièces structurelles génèrent une dispersion d'assemblage de telle sorte qu'il a été relevé que la fixation dudit moyen de portage sur la caisse peut engendrer une déformation localisée du pavillon qui est visible de l'extérieur du véhicule.

Le but de l'invention est de permettre un assemblage de qualité qui ne dégrade pas la qualité perçue du véhicule notamment au niveau du pavillon. En particulier, l'invention propose une caisse supportant un moyen de portage de manière simple et fiable, et étant peu onéreuse à produire.

L'objet de l'invention concerne un agencement d'une caisse de véhicule, notamment une automobile, comportant une structure de caisse et un pavillon de toit, caractérisé en ce que la structure de caisse comprenant en partie sommitale un brancard de toit réalisé par un côté de caisse et/ou un renfort de côté de caisse et/ou une doublure de côté de caisse dont l'empilement définit une voie de transfert d'efforts, la caisse comportant un nœud structurel à la jonction de la voie avec un support de traverse, le pavillon étant lié à la caisse par l'intermédiaire d'un renfort de fixation, le renfort comportant une mousse structurelle rendant apte la fixation du pavillon au nœud structurel. Selon l'invention, le support a un profil de section en U inversé avec des bords de pliés pour former des bandes de fixation sensiblement parallèles et le renfort de fixation est un pontet liant les bandes de fixation du support avec la voie de transfert d'efforts.

L'agencement de l'invention peut comporter les caractéristiques suivantes prises séparément ou en combinaison entre elles :
- la mousse structurelle est disposée entre le renfort de fixation et le support de traverse, le côté de caisse, le renfort de côté de caisse, ou la doublure de côté de caisse,
- le pavillon est lié à la caisse par l'intermédiaire d'un renfort de fixation,
- le pavillon est lié au côté de caisse par un cordon de soudure réalisé par une opération de soudo-brasage,
- il comprend une rainure délimitée par des bords incurvés du pavillon et du côté de caisse, la rainure étant de section transversale sensiblement en V pour rendre apte une opération de soudo-brasage du pavillon à la structure de caisse,
- la mousse structurelle est disposée sur une partie d'un bord périphérique du renfort de fixation,
- la mousse est réalisée à partir d'un produit intumescent déposé linéairement sous forme d'un cordon le long de la voie de transfert d'efforts et/ou d'un bord plié du support de traverse,
- le renfort de fixation comprend une interface destinée à la fixation par soudure au pavillon, l'interface comportant une face opposée sur laquelle est fixé un écrou, notamment par soudage.

L'invention a aussi trait à un procédé de réalisation de l'agencement précédemment décrit, caractérisé en ce qu'il comprend les étapes suivantes :
- fabriquer un brancard de toit avec un côté de caisse et/ou un renfort de côté de caisse et/ou une doublure de côté de caisse;
- assembler les brancards entre eux par l'intermédiaire d'une traverse de pavillon ;
- fabriquer un pavillon ;
- fabriquer un renfort de fixation d'un moyen de portage ;
- fixer le renfort de fixation sur le pavillon ;
- positionner l'ensemble ainsi formé sur la structure de caisse, par le dessus, de telle sorte que chaque bord latéral du pavillon vient en appui contre un côté de caisse ;
- fixer le pavillon au côté de caisse ;
- compenser les jeux d'assemblage présents entre la structure de caisse et le renfort de fixation au moyen d'une mousse structurelle intumescente.

L'invention concerne aussi un véhicule automobile, caractérisé en ce qu'il comprend un agencement conforme à l'une quelconque des caractéristiques susmentionnées ou un agencement réalisé selon le procédé précédemment cité.

Ces objets, caractéristiques et avantages de la présente invention seront exposés en détail dans la description suivante d'un mode de réalisation faite à titre non-limitatif en relation avec les figures jointes parmi lesquelles :
- la figure 1 représente une vue schématique, selon une coupe transversale, d'un mode de réalisation d'un véhicule ;
- la figure 2 représente un agrandissement d'une zone latérale gauche du mode de réalisation de la figure 1 ;
- les figures 3 et 4 représentent selon des vues en perspective partielle d'un renfort de fixation des figures 1 et 2,
- la figure 5 représente selon une perspective l'agencement selon l'invention.

Sur l'ensemble des figures, l'axe transversal Y s'étend de la droite vers la gauche du véhicule, l'axe vertical Z s'étend du bas vers le haut, l'axe longitudinal X étant donné selon un sens normal de déplacement du véhicule et de l'avant vers l'arrière. Les termes « haut » et « bas » ou « supérieur » et « inférieur » se rapportent à une orientation d'axe vertical Z. Pour ne pas alourdir les figures, les références numériques ne sont pas reproduites sur toutes les figures illustrant l'agencement selon l'invention.

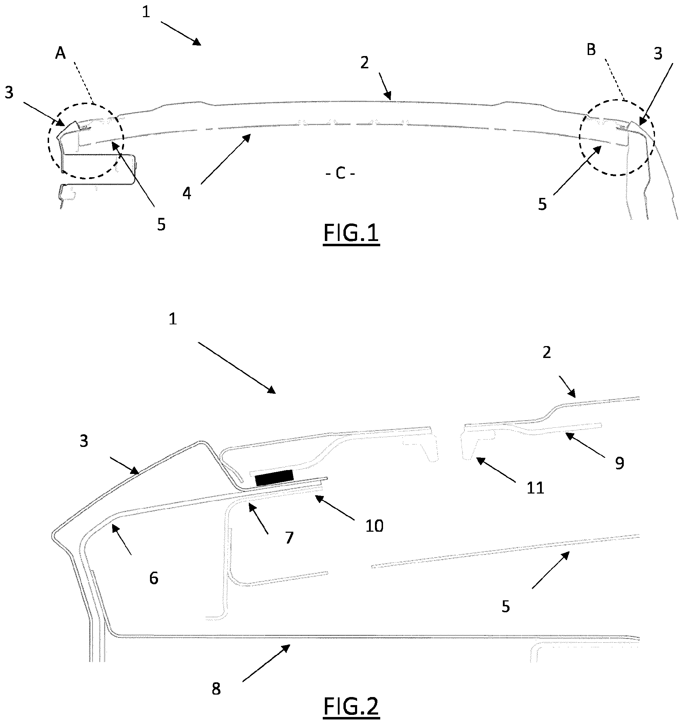

La figure 1 représente une partie de la structure de caisse du véhicule 1 dont l'extrémité sommitale comprend un pavillon 2 de toit dont les bords latéraux droit et gauche sont disposés en appui sur des brancards de toit. Ces derniers comprennent respectivement un panneau 3 de côté de caisse qui est disposé sensiblement à affleurement du pavillon 2 de toit, tel que cela est visible sur les zones A et B.

Pour améliorer la qualité perçue du véhicule, le pavillon 2 est assemblé à la structure de caisse par une opération de soudo-brasage. Dans ce but, la jonction d'entre le coté 3 de caisse et le pavillon 2 définit une rainure présente un profil sensiblement en V, une telle rainure est avantageusement destinée à recevoir le cordon de soudure lors de l'opération de soudo-brasage. En ce sens, chaque brancard comprend une portion inclinée qui selon une direction d'axe Z et de sens vers le bas, s'étend vers l'intérieur de ce dernier. Pour sa part, le pavillon comprend des bords latéraux recourbés.

Le brancard peut comprendre une poutre de rigidification qui présente une section creuse et qui est réalisée en partie d'un assemblage d'une pièce extérieure de carrosserie avec une pièce de renfort.

A titre d'exemple, la pièce extérieure est un côté 3 de caisse et la pièce de renfort est une doublure 7 de côté de caisse. La rigidité de la poutre peut en outre être renforcée par l'ajout d'un renfort 6 d'arche de pavillon, ces pièces étant disposées mutuellement à superposition respectivement par respectivement leur bride de fixation, souvent un bord de la feuillure. Une telle bride de fixation peut également être utilisée à des fins de fixation d'autres éléments structuraux parmi lesquels on peut trouver un support 5 qui est destiné à la fixation de la traverse 4 de pavillon.

La traverse 4 de pavillon s'étend transversalement au véhicule afin de lier entre eux les brancards latéraux droit et gauche qui délimitent les bords du pavillon, contre lesquels la pièce de carrosserie formant le pavillon 2 vient en appui.

Le pavillon 2 s'étend de manière sensiblement parallèle à une traverse 4 de pavillon.

Le panneau 3 de côté de caisse est une pièce de carrosserie qui est en partie rendue visible depuis l'extérieur du véhicule. Elle peut s'étendre depuis le montant de baie de pare-brise jusqu'à l'extrémité arrière du véhicule.

La partie sommitale du véhicule comprend de chaque côté du véhicule des poutres de section creuse que l'on nomme parfois de brancards de pavillon. Plusieurs traverses 4 de pavillon peuvent être utilisées afin de relier les brancards entre eux.

Le véhicule peut être du type d'un véhicule utilitaire qui peut avoir une dissymétrie par rapport à un plan médian XZ, comme cela est rendu visible sur la figure 1. Le côté gauche comprend un panneau 3 de côté de caisse visible sur la figure 1 est différent du côté droit de caisse. Le côté gauche est ici destiné à recevoir une porte latérale coulissante non représentée rendant apte l'accès à un compartiment C de chargement par l'intermédiaire d'une ouverture pratiquée notamment au travers du panneau 3 de côté de caisse.

Le côté droit comprend un panneau 3 de côté de caisse qui est différent en ce sens qu'il comprend une paroi pleine, tout du moins dépourvue d'une ouverture d'accès au compartiment C.

Toutefois, le côté droit du véhicule 1 peut être identique au côté gauche, à la symétrie près.

Chaque partie sommitale comprend un empilement de pièces structurelles qui réalise un brancard gauche ou droit de toit.

La zone A du côté gauche est agrandie sur la figure 2 afin de mettre en exergue les pièces structurelles qui composent le brancard gauche de toit.

Ce dernier comprend un renfort 6 de côté de caisse qui est disposé entre le panneau 3 de côté de caisse et une doublure 7 de côté de caisse. Une pièce d'interfaçage 8 de profil sensiblement linéaire et de section profil sensiblement en U incliné à l'horizontal est fixée au côté de caisse. La pièce d'interfaçage 8 présente un profil ouvert vers l'extérieur de telle sorte qu'elle délimite un logement qui est apte à recevoir un dispositif de coulissement d'une porte latérale, par exemple. La pièce d'interfaçage 8 est directement fixée au renfort 6 de côté de caisse. Chacune de ces pièces comprend un bord longitudinal intérieur de profil sensiblement plat afin de réaliser un empilement utile à une fixation par soudure, préférentiellement par des points de soudure électrique. Le brancard comprend une voie 12 de transfert d'efforts qui est réalisée par un empilement de ces trois pièces structurelles que sont le panneau 3, le renfort 6 et la doublure 7.
La doublure 7 présente un profil sensiblement en L inversé s'étendant verticalement entre le renfort 6 de côté de caisse et la pièce d'interfaçage 8.

La voie 12 de transfert d'efforts est approximativement du profil d'une bande plane s'étendant longitudinalement le long du pavillon 2.

La voie 12 de transfert d'efforts comprend un nœud 10 structurel qui est délimité par une jonction avec un support 5 de traverse 4 de pavillon. Du fait de cette jonction du brancard avec la traverse 4, le nœud 10 structurel est apte à résister à la déformation encore plus élevée qu'il ne l'est pour le reste de la voie 12 de transfert d'efforts.

Le nœud 10 structurel forme une bride de fixation sur laquelle un moyen de portage non représenté peut être fixé.

Un tel moyen de portage peut comprendre un pied de fixation d'une barre longitudinale ou transversale.

Préférentiellement, la bride de fixation est une zone délimitée de la voie 10 de transfert d'efforts qui est approximativement disposée au droit du support 5 dédié qui s'interface entre la doublure 7 de côté de caisse et la traverse 4.

Le support 5 a un profil de section en U inversé avec des bords pliés pour former des bandes de fixation sensiblement parallèles.

Les bandes de fixation du support 5 s'étendent dans un plan approximativement parallèle à la voie 12 de transfert d'effort.

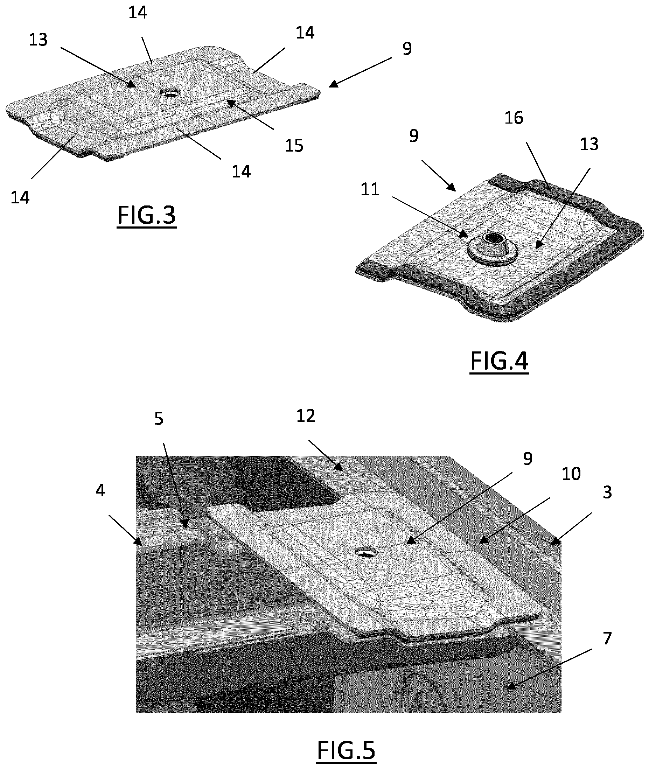

Sur la figure 5, une extrémité de la traverse 4 est représentée. Elle est de forme sensiblement complémentaire au support 5 sur lequel la traverse 4 est montée solidairement, notamment par soudage. A cet effet, la traverse 4 comprend à l'identique du support 5, un profil de section en U inversé avec des bords pliés pour former des bandes de fixation sensiblement parallèles entre elles. Ces dernières sont destinées à recouvrir par un empilement le support 5 pour y être fixées par soudure, notamment au moyen de point de soudure électrique. Le support 5 est monté solidaire de la doublure 7 de côté de caisse par son extrémité libre recourbée vers le haut comme est rendu visible sur le figure 2. Les bords pliés du renfort 5 viennent quant à eux en appui sous la voie 12 de transfert d'efforts, plus particulièrement par une mise en appui contre le renfort 6 de côté de caisse.

Au niveau de ce nœud 10 structurel, un renfort 9 de fixation dudit moyen de portage est rapporté.

Le renfort 9 de fixation est un pontet liant les bandes de fixation du support 5 avec la voie 12 de transfert d'efforts.

Le renfort 9 de fixation ferme localement le support 5 par une mise en appui contre les bandes de fixation du support 5.

Les bandes de fixation du support 5 ont chacune au moins une portion présentant deux sections planes directement adjacentes, chacune évoluant à une hauteur différente. La hauteur de chaque section plane est prédéterminée selon l'épaisseur et/ou la forme du renfort de fixation et/ou de la voie d'effort 12.

Le renfort 9 est conformé selon la voie 12 de transfert d'effort et les bandes de fixation du support 5.

Le renfort 9 peut avoir des bords transversaux incurvés sensiblement de forme en oméga comme cela est visible sur la figure 5. Cela permet de suivre les épaisseurs de tôle formées par un empilement.

Le renfort 9 peut avoir des bords longitudinaux sensiblement plans qui relient entre elles les bandes de fixation du support 5.

Le renfort 9 peut être réalisé à partir d'une plaque d'acier d'épaisseur supérieure à celle du coté 3 de caisse.

Le renfort 9 comprend au moins une nervure 15 de rigidification permettant de relier une zone centrale avec un bord 14 périphérique.

Le renfort 9 est conformé de manière à lier le support 5 et la voie 12 de transfert d'efforts au panneau 2, c'est-à-dire de lier le nœud 10 à la partie du pavillon destinée à recevoir le moyen de portage.

Le renfort 9 comprend un moyen de compensation des dispersions d'assemblage du pavillon 2 au nœud 10 structurel.

Le moyen de compensation des dispersions est une mousse 16 structurelle ayant une propriété d'expansion sous l'effet de la chaleur.

La mousse 16 s'active sous l'effet d'une température comprise entre 120°C et 210°C qui est atteinte dans une étuve située sur une ligne de fabrication d'une caisse.

La face intérieure du renfort 9 comprend la mousse 16 structurelle qui s'étend linéairement le long de tout ou partie du bord 14 périphérique, comme cela est illustré sur la figure 4.

Préférentiellement, la mousse 16 s'étend d'un seul tenant de sorte qu'elle forme un unique cordon de mousse disposé le long du bord 14 périphérique du renfort 9, plus précisément le long des différentes portions du bord 14 qui sont chacune destinée s'étendre au regard des bandes de fixation du support 5 ou de la portion de la voie 12 de transfert d'efforts délimitée par le nœud 10 structurel.

La zone centrale du renfort 9 est une interface 13 destinée à venir en appui contre la face intérieure du pavillon. Elle est par conséquent conformé selon la portion du pavillon 2 qui est destinée à recevoir ledit moyen de portage pour sa fixation à la caisse.

La fixation est assurée par vissage dudit moyen de portage au renfort 9 qui comprend à cet effet un écrou 11 rapporté soudé.

Le renfort 9 et le pavillon 2 comprennent chacun une ouverture destinée à recevoir une tige filetée, par exemple une vis de serrage.

L'ouverture du pavillon 2 est coaxiale à celle du renfort 9 qui porte l'écrou.

Le renfort 9 est disposé à recouvrement par le dessous du côté 3 de caisse et du support 5.

La face extérieure du renfort 9 qui est destinée à venir en appui contre le pavillon 2 afin de réaliser une fixation par soudure.

Dans ce qui suit, il va être décrit le procédé de fabrication de l'agencement, tel qu'il a été précédemment décrit.

Le procédé permettant de réaliser l'agencement susmentionné peut comprendre les étapes suivantes :
- fabriquer un brancard de pavillon avec le côté 3 de caisse et/ou le renfort 6 de côté de caisse et/ou la doublure 7 de côté de caisse ;
- assembler les brancards entre eux par l'intermédiaire d'une traverse 4 de pavillon ;
- fabriquer un renfort 9 de fixation d'un moyen de portage ;
- fixer le renfort 9 de fixation sur le pavillon 2 ;
- positionner l'ensemble ainsi formé sur la structure de caisse, par le dessus, de telle sorte que chaque bord latéral du pavillon 2 vient en appui contre un côté 3 de caisse ;
- fixer le pavillon 2 au côté 3 de caisse ;
- compenser les jeux de dispersion présents entre la structure de caisse et le renfort 9 de fixation.

Plus particulièrement, l'étape de fabrication du renfort 9 comprend une étape d'emboutissage d'une plaque d'acier permettant de créer la nervure 15 de rigidification. L'interface 13 du renfort 9 est décalée par rapport au bord 14 périphérique. La nervure 15 de rigidification permet de créer la rampe ascendante entre le bord 14 et l'interface 13. Le bord 14 peut également comprend une rampe ascendante afin de suivre le profil complexe d'appui définit par le support 5 et la voie 12 de transfert d'efforts contre lequel le renfort 9 de fixation est en tout ou partie rapporté en appui.

L'étape de fabrication du renfort 9 de fixation comprend une étape finale de dépose d'un cordon de mousse 16 structurelle d'expansion. Seules certaines des portions du bord 14 périphérique reçoivent la mousse 16. Il s'agit des portions qui font directement face aux bandes de fixation du support 5 et à la portion de voie 12 de transfert d'efforts du nœud 10 structurel.

L'étape consistant à fixer le renfort 9 sur le pavillon 2 réside en une opération initiale d'indexage selon laquelle un moyen de central rend apte le positionnement de manière coaxiale des ouvertures respectives du pavillon 2 et du renfort 9 de fixation. Une fois l'opération d'indexage réalisée, la position angulaire du renfort 9 par rapport au pavillon est figée afin de rendre apte l'opération finale de fixation. Cette dernière peut être réalisée par au moins un point de soudure électrique, préférentiellement deux points de soudure électrique. Ces derniers sont disposés à proximité immédiate des ouvertures coaxiale du pavillon 2 de sorte qu'elles seront par la suite masquées par le pied de fixation dudit moyen de portage qui vient coiffer localement le pavillon.

L'étape de fixation du pavillon 2 aux côtés 3 de caisse est réalisée préférentiellement par un cordon de soudure déposé dans la rainure définie le côté 3 de caisse et l'un des bords latéraux du pavillon 2.

Les jeux principalement en Z entre le renfort 9 de fixation et le support 5 de traverse ou la voie 12 de transfert d'efforts au niveau du nœud 10 structurel est compensé par une étape de mise à température de la caisse du véhicule. Une telle opération engendre un effet d'expansion de la mousse 16 structurelle.

L'agencement structurel de toit tel qu'il a été précédemment décrit permet une rigidité de la zone du pavillon 2 qui est destinée à recevoir ledit moyen de portage. Les jeux pouvant apparaître après l'assemblage des pièces de la structure de toit, lesquels sont dus à la dispersion d'assemblage résultant des tolérances de fabrication des pièces de la structure de caisse sont ainsi comblés par la mousse 16 structurelle. Il y ainsi impossibilité de réaliser la moindre déformation de la portion de pavillon 2 qui est destinée à recevoir par contact direct ledit moyen de portage.

L'agencement de caisse précédemment détaillée est apte à recevoir ledit moyen de portage, qui peut comprendre des barres longitudinales ou transversales. Le procédé de réalisation d'un tel agencement permet d'intégrer directement au procédé de fabrication du véhicule l'étape d'assemblage dudit moyen de portage à la structure de caisse.
Le renfort 9 de fixation peut être assimilable à un pontet assurant la liaison entre le pavillon et la traverse de pavillon. En outre il réalise une fermeture de l'extrémité du support 5 de traverse 4, en reliant entre eux les bords du support, ce qui contribue à améliorer la tenue à la déformation du nœud 10 structurel.

## Revendications

1. Agencement d'une caisse de véhicule (1), notamment une automobile, comportant une structure de caisse et un pavillon (2) de toit, la structure de caisse comprenant en partie sommitale un brancard de toit réalisé par un côté (3) de caisse et/ou un renfort (6) de côté de caisse et/ou une doublure (7) de côté de caisse dont l'empilement définit une voie (12) de transfert d'efforts, la caisse comportant un nœud (10) structurel à la jonction de la voie (12) avec un support (5) de traverse (4), le pavillon (2) étant lié à la caisse par l'intermédiaire d'un renfort (9) de fixation, le renfort (9) comportant une mousse (16) structurelle rendant apte la fixation du pavillon (2) au nœud (10) structurel, **caractérisé en ce que** le support (5) a un profil de section en U inversé avec des bords pliés pour former des bandes de fixation sensiblement parallèles et **en ce que** le renfort (9) de fixation est un pontet liant les bandes de fixation du support (5) avec la voie (12) de transfert d'efforts.

2. Agencement selon la revendication 1, **caractérisé en ce que** la mousse (16) structurelle est disposée entre le renfort (9) de fixation et le support (5) de traverse, le côté (3) de caisse, le renfort (6) de côté de caisse, ou la doublure (7) de côté de caisse.

3. Agencement selon la revendication 1 ou 2, **caractérisé en ce que** le pavillon (2) est lié à la caisse par l'intermédiaire d'un renfort (9) de fixation.

4. Agencement selon l'une quelconque des revendications précédentes, **caractérisé en ce que** le pavillon (2) est lié au côté (3) de caisse par un cordon de soudure réalisé par une opération de soudo-brasage.

5. Agencement selon la revendication précédente, **caractérisé en ce qu'**il comprend une rainure délimitée par des bords incurvés du pavillon (2) et du côté (3) de caisse, la rainure étant de section transversale sensiblement en V pour rendre apte une opération de soudo-brasage du pavillon (2) à la structure de caisse.

6. Agencement selon l'une quelconque des revendications précédentes, **caractérisé en ce que** la mousse (16) structurelle est disposée sur une partie d'un bord (14) périphérique du renfort (9) de fixation.

7. Agencement selon l'une quelconque des revendications précédentes, **caractérisé en ce que** la mousse (16) est réalisée à partir d'un produit intumescent déposé linéairement sous forme d'un cordon le long de la voie (12) de transfert d'efforts et/ou d'un bord plié du support (5) de traverse (4).

8. Agencement selon l'une quelconque des revendications précédentes, **caractérisé en ce que** le renfort (9) de fixation comprend une interface (13) destinée à la fixation par soudure au pavillon (2), l'interface (13) comportant une face opposée sur laquelle est fixé un écrou, notamment par soudage.

9. Procédé de réalisation de l'agencement selon l'une quelconque des revendications 1 à 8, **caractérisé en ce qu'**il comprend les étapes suivantes :
- fabriquer un brancard de toit avec un côté (3) de caisse et/ou un renfort (6) de côté de caisse et/ou une doublure (7) de côté de caisse;
- assembler les brancards entre eux par l'intermédiaire d'une traverse (4) de pavillon ;
- fabriquer un pavillon (2) ;
- fabriquer un renfort (9) de fixation d'un moyen de portage ;
- fixer le renfort (9) de fixation sur le pavillon (2) ;
- positionner l'ensemble ainsi formé sur la structure de caisse, par le dessus, de telle sorte que chaque bord latéral du pavillon (2) vient en appui contre un côté (3) de caisse ;
- fixer le pavillon (2) au côté (3) de caisse ;
- compenser les jeux d'assemblage présents entre la structure de caisse et le renfort (9) de fixation au moyen d'une mousse (16) structurelle intumescente.

10. Véhicule automobile (1), **caractérisé en ce qu'**il comprend un agencement selon l'une quelconque des revendications 1 à 8 ou un agencement réalisé selon le procédé de la revendication précédente.

## Patentansprüche

1. Anordnung einer Karosserie eines Fahrzeugs (1), insbesondere eines Kraftfahrzeugs, welche eine Karosseriestruktur und ein Dach (2) aufweist, wobei die Karosseriestruktur im oberen Bereich einen Dachlängsträger umfasst, der durch ein Karosserieseitenteil (3) und/oder eine Karosserieseitenteil-Verstärkung (6) und/oder eine Karosserieseitenteil-Auskleidung (7) hergestellt ist, deren Stapel einen Kraftübertragungsweg (12) definiert, wobei die Karosserie einen Strukturknoten (10) an der Verbindungsstelle des Weges (12) mit einem Träger (5) einer Traverse (4) aufweist, wobei das Dach (2) mit der Karosserie über eine Befestigungsverstärkung (9) verbunden ist, wobei die Verstärkung (9) einen Strukturschaum (16) aufweist, der die Befestigung des Daches (2) an dem Strukturknoten (10) ermöglicht, **dadurch gekennzeichnet, dass** der Träger (5) ein Querschnittsprofil in der Form eines umgekehrten "U" aufweist, mit umgebogenen Rändern, um im Wesentlichen parallele Befestigungstreifen zu bilden, und dadurch, dass die Befestigungsverstärkung (9) ein Steg ist, der die Befestigungstreifen des Trägers (5) mit dem Kraftübertragungsweg (12) verbindet.

2. Anordnung nach Anspruch 1, **dadurch gekennzeichnet, dass** der Strukturschaum (16) zwischen der Befestigungsverstärkung (9) und dem Träger (5) der Traverse, dem Karosserieseitenteil (3), der Karosserieseitenteil-Verstärkung (6) oder der Karosserieseitenteil-Auskleidung (7) angeordnet ist.

3. Anordnung nach Anspruch 1 oder 2, **dadurch gekennzeichnet, dass** das Dach (2) mit der Karosserie über eine Befestigungsverstärkung (9) verbunden ist.

4. Anordnung nach einem der vorhergehenden Ansprüche, **dadurch gekennzeichnet, dass** das Dach (2) mit dem Karosserieseitenteil (3) durch eine Schweißnaht verbunden ist, die durch einen Arbeitsvorgang des Schweißlötens hergestellt ist.

5. Anordnung nach dem vorhergehenden Anspruch, **dadurch gekennzeichnet, dass** sie eine Rille umfasst, die von gekrümmten Rändern des Daches (2) und des Karosserieseitenteils (3) begrenzt wird, wobei die Rille einen im Wesentlichen V-förmigen Querschnitt aufweist, um einen Arbeitsvorgang des Schweißlötens des Daches (2) an die Karosseriestruktur zu ermöglichen.

6. Anordnung nach einem der vorhergehenden Ansprüche, **dadurch gekennzeichnet, dass** der Strukturschaum (16) auf einem Teil eines Umfangsrandes (14) der Befestigungsverstärkung (9) angeordnet ist.

7. Anordnung nach einem der vorhergehenden Ansprüche, **dadurch gekennzeichnet, dass** der Strukturschaum (16) aus einem anschwellenden Produkt hergestellt ist, das in Form einer Raupe entlang des Kraftübertragungsweges (12) und/oder eines umgebogenen Randes des Trägers (5) der Traverse (4) geradlinig aufgebracht wird.

8. Anordnung nach einem der vorhergehenden Ansprüche, **dadurch gekennzeichnet, dass** die Befestigungsverstärkung (9) eine Schnittstelle (13) umfasst, die für die Befestigung durch Schweißung am Dach (2) bestimmt ist, wobei die Schnittstelle (13) eine gegenüberliegende Seite aufweist, auf welcher eine Mutter befestigt ist, insbesondere durch Schweißung.

9. Verfahren zur Herstellung der Anordnung nach einem der Ansprüche 1 bis 8, **dadurch gekennzeichnet, dass** es die folgenden Schritte umfasst:
- Herstellen eines Dachlängsträgers mit einem Karosserieseitenteil (3) und/oder einer Karosserieseitenteil-Verstärkung (6) und/oder einer Karosserieseitenteil-Auskleidung (7);
- Zusammenbauen der Dachlängsträger über eine Dachtraverse (4);
- Herstellen eines Daches (2);
- Herstellen einer Befestigungsverstärkung (9) eines Tragmittels;
- Befestigen der Befestigungsverstärkung (9) an dem Dach (2);
- Positionieren der so gebildeten Baugruppe von oben auf der Karosseriestruktur, derart, dass jeder seitliche Rand des Daches (2) an einem Karosserieseitenteil (3) zur Anlage kommt;
- Befestigen des Daches (2) an dem Karosserieseitenteil (3) ;
- Ausgleichen der Montagespiele, die zwischen der Karosseriestruktur und der Befestigungsverstärkung (9) vorhanden sind, mittels eines anschwellenden Strukturschaums.

10. Kraftfahrzeug 1), **dadurch gekennzeichnet, dass** es eine Anordnung nach einem der Ansprüche 1 bis 8 oder eine Anordnung, die gemäß dem Verfahren des vorhergehenden Anspruchs hergestellt ist, umfasst.

## Claims

1. Arrangement of a body of a vehicle (1), notably a motor vehicle, comprising a body structure and a roof panel (2), the body structure comprising, at the top, a roof side rail formed by a body side (3) and/or a body side reinforcement (6) and/or a body side lining (7) the stacking of which defines a load-transfer path (12), the body comprising a structural node (10) where the path (12) meets a support (5) for a crossmember (4), the roof panel (2) being connected to the body via an attachment reinforcement (9), the reinforcement (9) comprising a structural foam (16) making attachment of the roof panel (2) to the structural node (10) suitable, **characterized in that** the support (5) has an inverted-U section profile with turned-up edges to form substantially parallel attachment strips, and **in that** the attachment reinforcement (9) is a bridging piece connecting the attachment strips of the support (5) to the load-transfer path (12).

2. Arrangement according to Claim 1, **characterized in that** the structural foam (16) is positioned between the attachment reinforcement (9) and the crossmember support (5), the body side (3), the body side reinforcement (6) or the body side lining (7).

3. Arrangement according to Claim 1 or 2, **characterized in that** the roof panel (2) is connected to the body via an attachment reinforcement (9).

4. Arrangement according to any one of the preceding claims, **characterized in that** the roof panel (2) is connected to the body side (3) by a welded seam produced using a braze-welding operation.

5. Arrangement according to the preceding claim, **characterized in that** it comprises a groove delimited by curved edges of the roof panel (2) and of the body side (3), the groove having a substantially V-shaped cross section to make an operation of braze-welding the roof panel (2) to the body structure suitable.

6. Arrangement according to any one of the preceding claims, **characterized in that** the structural foam (16) is positioned on part of a peripheral edge (14) of the attachment reinforcement (9).

7. Arrangement according to any one of the preceding claims, **characterized in that** the foam (16) is made from an intumescent product applied linearly in the form of a bead along the load-transfer path (12) and/or along a turned-up edge of the support (5) of the crossmember (4).

8. Arrangement according to any one of the preceding claims, **characterized in that** the attachment reinforcement (9) comprises an interface (13) intended for attachment to the roof panel (2) by welding, the interface (13) comprising an opposite face to which a nut is attached, notably by welding.

9. Method for achieving the arrangement according to any one of Claims 1 to 8, **characterized in that** it comprises the following steps:
- manufacturing a roof side rail with a body side (3) and/or a body side reinforcement (6) and/or a body side lining (7);
- assembling the side rails with one another via a roof crossmember (4);
- manufacturing a roof panel (2);
- manufacturing an attachment reinforcement (9) for attaching a carrying means;
- attaching the attachment reinforcement (9) to the roof panel (2);
- positioning the assembly thus formed on the body structure, from above, so that each lateral edge of the roof panel (2) comes to rest against a body side (3);
- attaching the roof panel (2) to the body side (3);
- compensating for the assembly clearances present between the body structure and the attachment reinforcement (9) using an intumescent structural foam (16).

10. Motor vehicle (1), **characterized in that** it comprises an arrangement according to any one of Claims 1 to 8 or an arrangement produced according to the method of the preceding claim.
